Europäisches Patentamt

European Patent Office

Office européen des brevets

(19)

(11) **EP 1 153 785 B1**

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(51) Int Cl.⁷: **B60K 26/02**, G05G 1/14

(21) Anmeldenummer: **01110953.5**

(22) Anmeldetag: **07.05.2001**

(54) **Fahrpedalmodul**

Accelerator pedal module

Pédale d'accélérateur modulaire

(84) Benannte Vertragsstaaten:
**AT BE CH CY DE DK ES FI FR GB GR IE IT LI LU MC NL PT SE TR**

(30) Priorität: **10.05.2000 DE 10033295**

(43) Veröffentlichungstag der Anmeldung:
**14.11.2001 Patentblatt 2001/46**

(73) Patentinhaber: **AB Elektronik GmbH**
**59368 Werne (DE)**

(72) Erfinder: **Apel, Peter**
**59394 Südkirchen (DE)**

(74) Vertreter: **Hoffmeister, Helmut, Dr.**
**c/o Dr. Hoffmeister & Tarvenkorn,**
**Goldstrasse 36**
**48147 Münster (DE)**

(56) Entgegenhaltungen:
| | |
|---|---|
| EP-A- 0 748 713 | WO-A-97/12780 |
| DE-A- 19 503 335 | DE-C- 19 531 735 |
| DE-U- 9 409 892 | DE-U- 29 502 529 |
| DE-U- 29 602 611 | US-A- 5 868 040 |

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Fahrpedalvorrichtung für Fahrzeuge, insbesondere Personenkraftwagen, die wenigstens aufweist,

- ein Grundplattenelement,
- ein Fahrpedalelement, das in einem Fahrpedaldrehpunkt mit dem Grundplattenelement verbunden ist, und
- wenigstens eine Pedalrückholeinrichtung, die zwischen dem Fahrpedal- und dem Grundplattenelement angeordnet ist.

Eine Vorrichtung der eingangs genannten Art ist aus der DE 94 09 892 U1 bzw. der DE 195 03 335 A1 der Anmelderin bekannt. Sie besteht aus einem Pedalelement, das in einem Drehpunkt gehalten ist, und wenigstens einem Rückholelement, das mit dem Pedalelement verbunden ist. Als Rückholelemente werden zwei Rückholfedern verwendet. Im Drehpunkt ist ein Drehwinkelsensorelement angeordnet. Diese Fahrpedalvorrichtung hat sich bewährt, ist im Aufbau aber aufwendig.

Aus der DE 295 02 529 U1 bzw. DE 296 02 611 U1 ist ebenfalls eine Fahrpedalvorrichtung bekannt. Sie weist ein Pedalelement auf, das in einem Drehpunkt gehalten ist. Mit dem Pedalelement ist wenigstens ein Rückholelement verbunden. Als Rückholelement kommt eine Dämpfereinrichtung zum Einsatz, die eine Bewegungshysterese-Schleife derart realisiert, das einer Betätigungs- und Rückbewegung jeweils eine Dämpfungsenergie entgegenwirkt. Die Dämpfereinrichtung besteht aus einer Hydraulikeinheit, die mit zwei Federelementen zusammenwirkt.

Nachteilig ist, daß auch diese Fahrpedalvorrichtung zu aufwendig aufgebaut ist.

Es stellt sich deshalb die Aufgabe, eine Fahrpedalvorrichtung für Fahrzeuge, insbesondere Personenkraftwagen der eingangs genannten Art so weiter zu entwickeln, daß deren Aufbau einfacher wird.

Erfindungsgemäß wird diese Aufgabe durch die Merkmale des Anspruchs 1 oder 2 oder 3 gelöst.

Die mit der Erfindung erzielten Vorteile bestehen insbesondere darin, daß durch die Federelemente und die Gleitflächenelemente die Bewegung des Fahrpedalelements in Richtung Grundplattenelement beeinflußbar ist. Sie ist beeinflußbar durch die Wahl des Materials für die Ausbildung des Gleitflächenelements sowie die Übertragung der Federkräfte auf das Gleitflächenelement. Die Anordnung des Gleitflächenelements im Bereich des Pedalringelements erlaubt eine sehr dosierte Einstellung und Beeinflussung der Drehbewegung an sich. Durch die Beeinflussung der Drehbewegung kann das Betätigen des Fahrpedalelements in Richtung Grundplattenelement so eingestellt werden, daß dieser Bewegung ein Widerstand entgegenwirkt, während beim Loslassen dieser Widerstand geringer ist. Hierdurch wird eine Bewegungshysterese-Schleife nachgezeichnet, die durch die Federkennlinie und die Reibungskräfte beeinflußt wird. Beim Halten des Fahrpedalelements in einer Stellung braucht nur die Federkraft kompensiert zu werden.

Die Federelemente können aus einem Federdraht hergestellt sein, der einen runden Querschnitt aufweisen kann. Auch andere geometrische Querschnittsformen, wie oval, rechteckig oder dergleichen sind möglich.

Die einzelnen Federelemente, die ersten und die zweiten Federhalteelemente können paarweise vorhanden sein. Hierdurch wird die Sicherheit der gesamten Vorrichtung erhöht und zugleich die bestehenden Vorschriften erfüllt.

Das Gleitschienenelement kann einteilig, d.h. einzeln oder paarig ausgebildet sein. Bei der paarigen Ausbildung kann der paarigen Ausbildung der Federelemente Rechnung getragen werden und jedem Federelement ein separates Gleitflächenelement zugeordnet werden.

Im Bereich des Achsenelements oder am Fahrpedalelement kann ein Potentiometer-, Hall- oder eine nach einem ähnlichen Prinzip arbeitende Drehwinkelsensoreinrichtung angeordnet sein. Hierdurch ist eine drahtgebundene Übertragung der Gaspedal-Stellungen zum Motor und damit dessen exakte Verstellung möglich.

Das Achsenelement kann als Teil eines Scharniergelenk-Verbindungselements ausgebildet sein. Hierdurch ist eine sichere Bewegung des Fahrpedalelements gegenüber dem Grundplattenelement möglich.

Das Achsenelement kann wenigstens teilweise als Hohlzylinder ausgebildet sein.

Das Gleitflächenelement kann aus wenigstens einem Material mit einem Reibungskoeffizienten ausgebildet sein. Durch die Wahl mehrerer Reibungskoeffizienten ist die Bremswirkung auf das Fahrpedalelement entsprechend dosierbar. Mit einer Verdrehung des Pedalringelementskönnen durch ein Produkt aus Federkraft und Reibungskoeffizient Bewegungsabläufe des Fahrpedalelements beeinflußt werden. Der Bewegungsablauf kann hierbei hystereseähnlich mit exponentiellen, logarithmischen oder dergleichen Anfangssteigungen ausgebildet werden.

Die Erfindung wird anhand der Zeichnung näher erläutert. Es zeigen:

Fig. 1 eine erste Ausführungsform eines Fahrpedalmoduls in zwei Betätigungsstellungen in einer schematisch dargestellten Vorderansicht,

Fig. 2 einen Schnitt durch ein Fahrpedalmodul gemäß Fig. 1 in einer ersten Betätigungsstellung entlang der Linie II-II,

Fig. 3 einen Schnitt durch ein Fahrpedalmodul gemäß Fig. 1 in einer zweiten Betätigungsstellung entlang der Linie III-III,

Fig. 4 eine vergrößerte Teilansicht eines in Fig. 1 dargestellten Fahrpedalmoduls,

Fig. 5 eine vergrößerte Teilansicht eines in Fig. 2 dargestellten Fahrpedalmoduls,

Fig. 6 eine zweite Ausführungsform eines Fahrpedalmoduls in zwei Betätigungsstellungen in einer schematisch dargestellten Vorderansicht,

Fig. 7 einen Schnitt durch ein Fahrpedalmodul gemäß Fig. 6 in einer ersten Betätigungssstellung entlang der Linie VII-VII,

Fig. 8 einen Schnitt durch ein Fahrpedalmodul gemäß Fig. 6 in einer zweiten Betätigungsstellung entlang der Linie VIII-VIII,

Fig. 9 eine dritte Ausführungsform eines Fahrpedalmoduls in einer schematisch dargestellten Teilschnittdarstellung,

Fig. 10 einen Schnitt durch ein Fahrpedalmodul gemäß Fig. 9 entlang der Linie X-X und

Fig. 11 einen Schnitt durch ein Fahrpedalmodul gemäß Fig. 9 entlang der Linie XI -XI.

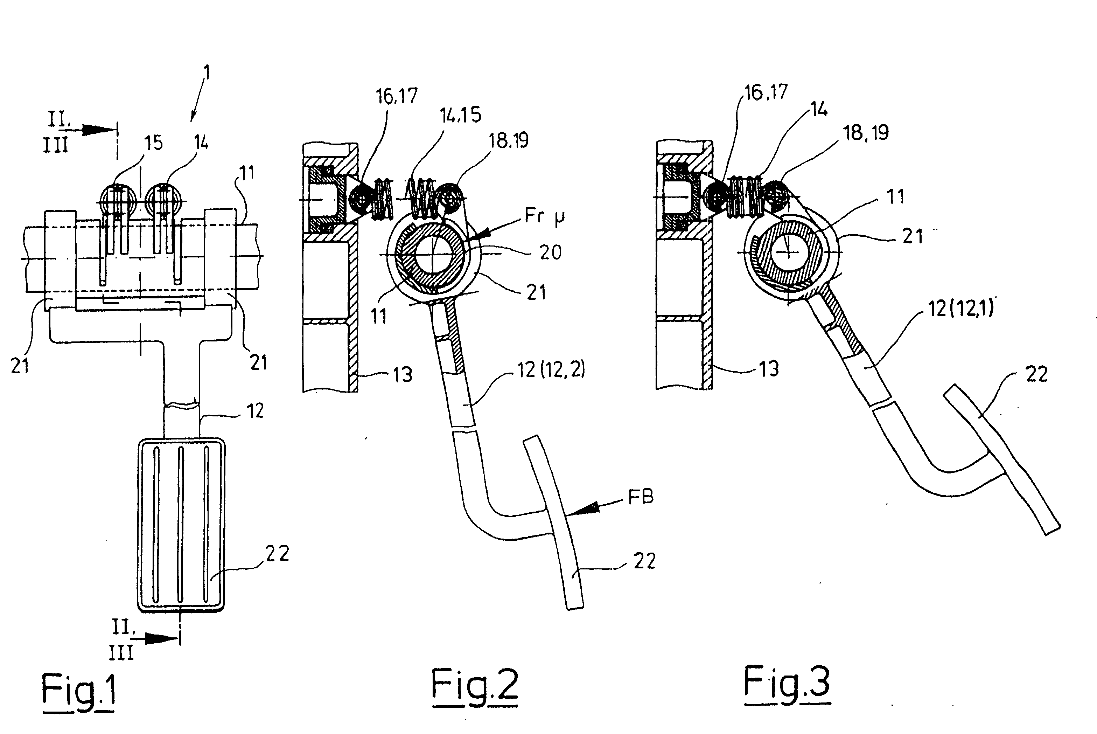

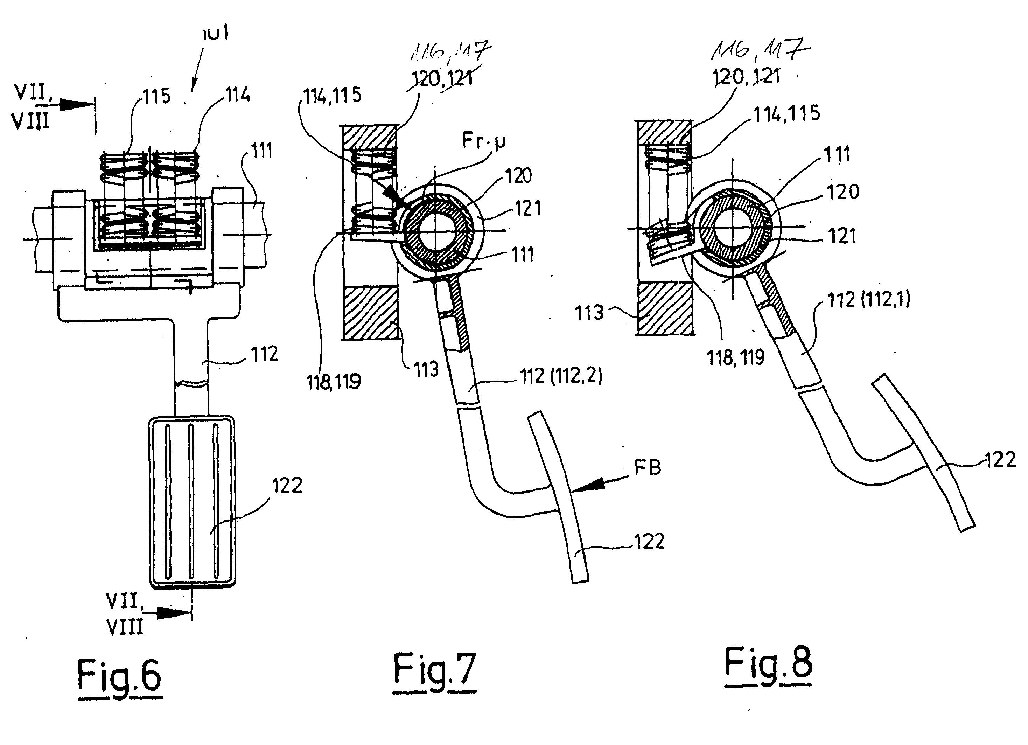

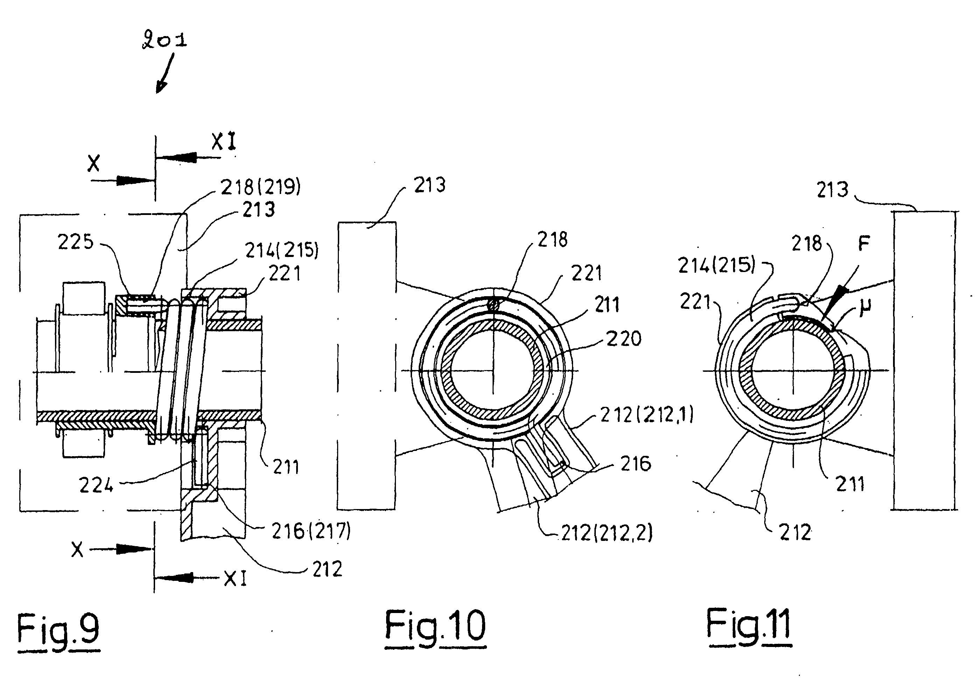

In den Fig. 1 bis 5 ist ein Fahrpedalmodul 1, in den Fig. 6 bis 8 ein Fahrpedalmodul 101 und in den Fig. 9 bis 11 ein Fahrpedalmodul 201 gezeigt.

Das Fahrpedalmodul 1, 101, 201 besteht aus

- einem Fahrpedalelement 12, 112, 212 und
- einem Grundplattenelement 13, 113, 213, die in einem
- Fahrpedaldrehpunkt 11, 111, 211 relativ zueinander ver stellbar sind.

Der Fahrpedaldrehpunkt ist als Achsenelement 11, 111, 211 ausgebildet. Um das wenigstens teilweise hohlzylinderförmig ausgebildete Achsenelement 11, 111, 211 ist ein Pedalringelement 21, 121, 221 des Fahrpedalelements 12, 112, 212 bewegbar. Gegenüber der Außenfläche des Achsenelements 11, 111, 211 ist wenigstens teilweise umlaufend ein Gleitflächenelement 20, 120, 220 positioniert.

Das Fahrpedalmodul 1 gemäß Fig. 1 bis 5 weist zwischen dem Pedalringelement 21 des Fahrpedalelements 12 und dem Grundplattenelement 13 angeordnete Zugfederelemente 14, 15 auf. Diese sind am Grundplattenelement in Federhalteelementen 16, 17 und am Pedalringelement in Federhalteelementen 18, 19 gehalten. Das Fahrpedalelement 12 endet, wie die Fig. 1 bis 3 zeigen, in einem Pedalbetätigungselement 22, dessen Oberfläche entsprechend strukturiert ist.

Wirkt auf das Pedalbetätigungselement 22 eine Betätigungskraft FB, wird das Fahrpedalelement von einer Ruhestellung 12.1 gemäß Fig. 3 in eine Betätigungsstellung 12.2 gemäß Fig. 2 bewegt. Bei dieser Bewegung drehen sich die Innenfläche der beiden parallelliegenden Pedalringelemente, wie sie in Figuren dargestellt sind, über die vorzugsweise auf der Oberfläche des Achsenelements 11 angeordneten Gleitflächenelemente 20, die einen Reibungskoeffizienten μ aufweisen.

Bei der Betätigung von der Ruhestellung 12.1 in die Betätigungsstellung 12.2 werden die beiden nebeneinander angeordneten Zugfederelemente 14, 15 kontinuierlich gespannt, so daß deren Federkraft Fr steigt. Die Bewegungsabläufe des Fahrpedalelements 13 können so ganz gezielt gesteuert und beeinflußt werden. Die Federkraft erhöht den Druck des Pedalringelements entsprechend der Federkennlinie auf das Gleitflächenelement 20, so daß eine immer höhere Betätigungskraft FB aufgewendet werden muß, um das Pedalbetätigungselement weiter in Richtung Betätigungsstellung 12.2 zu bewegen. Durch die Wahl unterschiedlicher Materialien kann der Reibungskoeffizient μ so gewählt werden, daß die aufzubringende Betätigungskraft FB noch stärker ansteigt oder in gleichem Maße abfällt.

Ist die Betätigungskraft FB gleich Null, d.h. der Fuß wird vom Pedalbetätigungselement 22 heruntergenommen, nimmt das Fahrpedalelement 22 gehemmt seine Ruhestellung 12.1 wieder ein. Hierbei rutscht das Pedalringelement auf dem Gleitflächenelement 20 zurück, so daß insgesamt eine Bewegungshystere-Schleife nachgezeichnet wird, die durch die Federkennlinie und die Reibung μ wirksam zu beeinflussen ist.

Soll eine Pedalstellung eingenommen und gehalten werden, wird der Fuß kurz vom Pedalelement genommen und ruht dann in einer Endstellung darauf. FB ist kurzzeitig gleich Null. Die Reibung hebt kurzzeitig die Federkräfte F auf. Danach braucht FB nur noch gleich Fr sein.

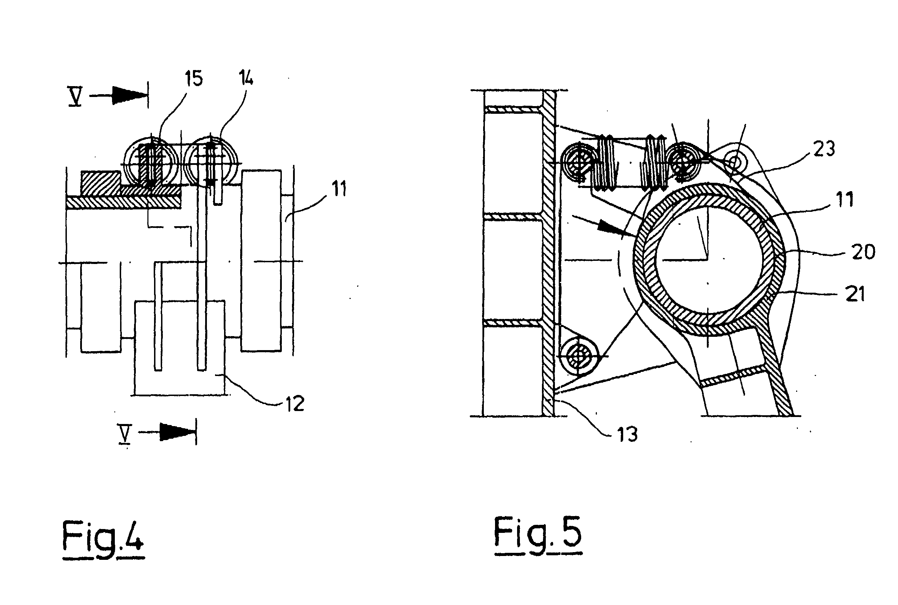

Wie insbesondere Fig. 4 und 5 zeigen, sind die Enden der Federn 14, 15 wenigstens teilringförmig ausgebildet und werden auf sogenannte bolzenförmig ausgebildete Federhalteelemente 16, 17, 18, 19 aufgesteckt. Durch entsprechende Endsicherung ist gewährleistet, daß die Enden sich nicht von den Federhalteelementen lösen können.

Bei dem in den Zeichnungen 6 bis 8 dargestellten Fahrpedalmodul 101 sind zwischen dem Fahrpedalelement 112 und dem Grundplattenelement 113 zwei nebeneinander liegende Druckfederelemente 114, 115 positioniert. Hierbei sind am Pedalringelement 121 plattenförmig ausgebildete Federhalteelemente 118, 119 und am Grundplattenelement flächenartig ausgebildete Federhalteelemente 116, 117 vorgesehen. Die beiden Druckfederelemente bewegen sich in Freiräumen, die im Grundplattenelement 113 eingebracht sind.

Bei einer auf das Pedalbetätigungselement 122 wirkende Betätigungskraft FB wird das Fahrpedalelement 112 von einer Ruhestellung 112.1, wie sie in Fig. 8 dargestellt ist, in Richtung einer Betätigungsstellung 112.2 bewegt, wie sie in Fig. 7 gezeigt ist. Bei dieser Bewegung werden die beiden Druckfederelemente zusammengedrückt, so daß deren Federkraft Fr stetig zunimmt und hierbei durch Zunahme des Drucks auf die Federhalteelemente 118, 119 das Gleitflächenelement 120 immer stärker ansteigend belastet wird, so daß auch hier die Bewegungsabläufe deart zu beeinflussen sind, daß der Reibungskoeffizient μ ansteigend oder abfallend auf dem Gleitflächenelement 120 gewählt wird. Hierdurch ist eine ansteigende Kraft erzeugbar, der eine stärker werdende Betätigungskraft FB entgegen gesetzt werden muß. Der Bewegungsablauf des Fahrpedalelements 112 zum Grundplattenelement 113 hin kann auch hier entsprechend ansteigend ausgebildet werden.

Wird das Fahrpedalelement 112 losgelassen, so daß die Betätigungskraft FB gleich Null ist, bewegt sich das Fahrpedalelement durch die frei werdende Federkraft der beiden Druckfederelemente in die Ruhestellung 112.1 zurück und das Padalringelement 121 gleitet nur noch über das Gleitflächenelement 120 weil es nicht mehr durch die Federkraft Fr belastet wird.

Auch hier wird eine Bewegungshysterese-Schleife nachgezeichnet, die durch Fr und μ beeinflußt wird. Beim Halten des Fahrpedalelements in einer Stellung ist FB kurzzeitig gleich Null und danach gilt FB = Fr.

Bei dem Fahrpedalmodul 201 gemäß den Fig. 9 bis 11 sind zwischen dem Fahrpedalelement 212 und dem Grundplattenelement 213 zwei nebeneinander liegende Verdrehfederelemente 214, 215 angeordnet. Hierbei sind die Verdrehfederelemente um das Achsenelement 211 gewickelt, wobei ein Federanfang 224 über das Pedalringelement 221 geführt in ein Federhalteelement 216, 217 gesteckt und ein Federende 225 in ein Federhalteelement 218, 219 eingesetzt wird. Das Gleitflächenelement 220 kann hierbei entweder über dem Achsenelement 211 oder an der Innenfläche der Verdrehfederelemente 214, 215 angeordnet werden.

Wird das Fahrpedalelement 212 von einer Ruhe- in eine Betätigungsstellung 212.1, 212.2 bewegt, legen sich die Innenseiten der Verdrehfedern sukzessive mit einer Andrückkraft F auf das Achsenelement 211. Hierdurch wird das Gleitflächenelement 220 abschnittsweise wirksam und die Bewegungsabläufe des Fahrpedalelements 211 nach der Beziehung

$$F \times \mu$$

beeinflußt. Das Gleitflächenelement 220 kann hier nicht nur mit unterschiedlichen Reibungskoeffizienten μ versehen werden, sondern kann den Reibungskoeffizienten μ durch die zunehmende Kontaktnahme der Schraubengänge des Verdrehfederelements gegenüber dem Achsenelement 211 zusätzlich beeinflussen, so daß auch hier eine ansteigende Betätigungskraft erforderlich ist, um das Fahrpedalelement 212 von der Ruhestellung 212.1 in die Betätigungsstellung 212.2, d.h. bis zur Endstellung, zu betätigen.

Wird das Fahrpedalelement 212 von der Betätigungskraft befreit, wird das Fahrpedalelement so in die Ruhestellung 212.1 zurückverstellt, daß die Innenflächen der Federgänge der Verdrehfeder sich wieder nacheinander gegenüber dem Achsenelement 211 lösen und dadurch das Gleitflächenelement 220 an Wirkung verliert, so daß der Federrückstellkraft ein abfallender Widerstand entgegengesetzt wird.

Nachgezeichnet wird hier eine Bewegungshysterese-Schleife, die zur Hinbewegung stark und zur Rückwärtsbewegung am Anfang leicht gekrümmt und zur Ruhestellung hin flach ist. Die Umstellung von der Hin- in die Rückwärtsbewegung vollzieht sich "weich". Sie ist durch die Wahl des Reibungskoeffizienten μ gestaltbar.

Nimmt das Fahrpedalelements 213 eine bestimmte Ruhe-Stellung ein, werden den Federrückstellkräften zuerst kurze Zeit die Reibungswiderstände des Gleitfächenelements 220 entgegengesetzt. Beim Halten des Fahrpedalelements 213 in dieser Stellung verlieren die Reibungswiderstände im wesentlichen ihre Wirkung, so daß nur die Federrückstellkräfte durch die Betätigungskraft FB kompensiert zu werden braucht.

**Bezugszeichenliste**

| | |
|---|---|
| 1, 101, 201 | Fahrpedalmodul |
| 11, 111, 211 | Achsenelement |
| 12, 112, 212 | Fahrpedalelement |
| 12.1, 112.1, 212.1 | Ruhestellung |
| 12.2, 112.2, 212.2 | Betätigungsstellung |
| 13, 113, 213 | Grundplattenelement |
| 14, 15 | Zugfederelement |
| 114, 115 | Druckfederelement |
| 214, 215 | Verdrehfederelement |
| 16, 17, 18, 19, 116, 117, 118, 119, 216, 217, 218, 219 | Federhalteelement |
| 20, 120, 220 | Gleitflächenelement |
| 21, 121, 221 | Pedalringelement |
| 22, 122 | Pedalbetätigungselement |
| 23 | Federgleitflächenelement |
| 224 | Federanfang |
| 225 | Federende |
| FB | Betätigungskraft |
| Fr | Federkraft |
| F | Andrückkraft |
| μ | Reibungskoeffizient |

**Patentansprüche**

1. Fahrpedal vorrichtung (1) für Fahrzeuge, insbesondere Personenkraftwagen, die wenigstens aufweist,

- ein Grundplattenelement (13),
- ein Fahrpedalelement (12), das in einem Fahrpedaldrehpunkt (11) mit dem Grundplattenelement (13) verbunden ist, und
- wenigstens eine Pedalrückholeinrichtung (14, 15, 16, 17, 18, 19, 20, 21), die zwischen dem Fahrpedal- und dem Grundplattenelement (12, 13) angeordnet ist, **dadurch gekennzeichnet,**
- **daß** die Pedalrückholeinrichtung wenigstens ein schraubenförmiges Zugfederelement (14, 15) aufweist, das an einem Ende mit einem ersten Federhalteelement (16, 17) verbunden ist, das auf dem Grundplattenelement (13) angeordnet ist, und am anderen Ende mit einem zweiten Federhalteelement (18, 19) verbunden ist, das an einem Pedalringelement (21) des Fahrpedalelements (12) angeordnet ist, und

- **daß** der Fahrpedaldrehpunkt als ein Achsenelement (11) ausgebildet ist, auf dem das Pedalringelement (21) auf einem zwischen ihm und dem Achsenelement (11) angeordneten Gleitflächenelement (20) zu verdrehen ist.

2. Fahrpedalvorrichtung (101) für Fahrzeuge, insbesondere Personenkraftwagen, die wenigstens aufweist,

- ein Grundplattenelement (113),
- ein Fahrpedalelement (112), das in einem Fahrpedaldrehpunkt (111) mit dem Grundplattenelement (113) verbunden ist, und
- wenigstens eine Pedalrückholeinrichtung (114, 115, 116, 117, 118, 119, 120, 121), die zwischen dem Fahrpedal- und dem Grundplattenelement (112, 113) angeordnet ist, **dadurch gekennzeichnet,**
- **daß** die Pedalrückholeinrichtung wenigstens ein Druckfederelement (114, 115) aufweist, das an einem Ende an einem ersten Federhalteelement (118, 119) anliegt, das an einem Pedalringelement (121) des Fahrpedalelements (112) angeordnet ist, und am anderen Ende an einem zweiten Federhalteelement (116, 117) anliegt, das an dem Grundplattenelement (113) angeordnet ist, und
- **daß** der Fahrpedaldrehpunkt als Achsenelement (111) ausgebildet ist, auf dem das Pedalringelement (121) auf einem zwischen ihm und dem Achsenelement (111) angeordneten Gleitflächenelement (120) zu verdrehen ist.

3. Fahrpedalvorrichtung (201) für Fahrzeuge, insbesondere Personenkraftwagen, die wenigstens aufweist,

- ein Grundplattenelement (213),
- ein Fahrpedalelement (212), das in einem Fahrpedaldrehpunkt (211) mit dem Grundplattenelement (213) verbunden ist, und
- wenigstens eine Pedalrückholeinrichtung (214, 215, 216, 217, 218, 219, 220, 221), die zwischen dem Fahrpedal- und dem Grundplattenelement (212, 213) angeordnet ist, **dadurch gekennzeichnet,**
- **daß** die Pedalrückholeinrichtung wenigstens ein Verdrehfederelement (214, 215) aufweist, das mit seinem Federanfang (224) mit einem ersten Federhalteelement (216, 217) über ein Pedalringelement (221) an dem Fahrpedalelement (212) angeordnet ist und mit seinem Federende (225) mit einem zweiten Federhalteelement (218, 219) verbunden ist, das auf dem Grundplattenelement (213) angeordnet ist, und
- **daß** der Fahrpedaldrehpunkt als Achsenelement (211) ausgebildet ist, auf dem das Pedalringelement (221) über das Verdrehfederelement (214, 215) auf einem zwischen der Innenfläche des Verdrehfederelements (214, 215) und dem Achsenelement (211) angeordneten Gleitflächenelement (220) zu verdrehen ist.

4. Vorrichtung nach Anspruch 1 oder 2 oder 3, **dadurch gekennzeichnet, daß** das Zug-, das Druck- oder das Verdrehfederelement (14, 15; 114, 115; 214, 215), die ersten Federhaltehalteelemente (16, 17; 116, 117; 216, 217), und die zweiten Federgleithalteelemente (18, 19; 118, 119; 218, 219) paarweise vorhanden sind.

5. Vorrichtung nach einem der Ansprüche 1 bis 4, **dadurch gekennzeichnet, daß** ein Federdraht, aus dem die Federelemente (14, 15; 114, 115; 214, 215) hergestellt sind, im Querschnitt rund, oval oder rechteckig ausgebildet ist.

6. Vorrrichtung nach einem der Ansprüche 1 bis 5 **dadurch gekennzeichnet, daß** das Gleitflächenelement (20, 120, 220) einzeln oder paarig ausgebildet ist.

7. Vorrichtung nach einem der Ansprüche 1 bis 6, **dadurch gekennzeichnet, daß** eine Potentiometer-, Hall- oder eine nach einem ähnlichen Prinzip arbeitende Drehwinkelsensoreinrichtung vorgesehen ist, die im Bereich des Achsenelements (11, 111, 211) oder am Fahrpedalelement (12; 112; 212) angeordnet ist.

8. Vorrichtung nach einem der Ansprüche 1 bis 7, **dadurch gekennzeichnet, daß** das Achsenelement (11, 111, 211) Teil eines Scharniergelenk-Verbindungselements ist.

9. Vorrichtung nach einem der Ansprüche 1 bis 8, **dadurch gekennzeichnet, daß** das Achsenelement (11, 111, 211) wenigstens teilweise als Hohlzylinder ausgebildet ist.

10. Vorrichtung nach einem der Ansprüche 1 bis 9, **dadurch gekennzeichnet,**

- **daß** das Gleitflächenelement (20, 120, 220) aus wenigstens einem Material mit einem Reibungskoeffizienten (µ) besteht und
- **daß** mit einer Verdrehung des Pedalringelements (221, 121, 221) durch ein Produkt aus resultierender Federkraft (Fr; F) und Reibungskoeffizient (µ) Bewegungsabläufe des Fahrpedalelements (12, 112, 212) zu beeinflussen sind.

**Claims**

1. An accelerator pedal mechanism (1) for motor vehicles, particularly private motor vehicles, comprising at least:

   - a baseplate element (13),

   - an accelerator pedal element (12) connected to the baseplate element (13) in an accelerator pedal fulcrum (11) and

   - at least one pedal return mechanism (14, 15, 16, 17, 18, 19, 20, 21) disposed between the accelerator pedal element and the baseplate element (12, 13), **characterised in that**:

   - the pedal return mechanism comprises at least one helical tension spring element (14, 15) connected at one end to a first spring retaining element (16, 17) disposed on the baseplate element (13), and connected at the other end to a second spring retaining element (18, 19) disposed on a pedal ring element (21) of the accelerator pedal element (12), and

   - **in that** the accelerator pedal fulcrum is constructed as a shaft element (11) on which the pedal ring element (21) is rotatable on a friction surface element (20) disposed between it and the shaft element (11).

2. An accelerator pedal mechanism (102) for motor vehicles, particularly private motor vehicles, comprising at least

   - a baseplate element (113),

   - an accelerator pedal element (112) connected to the baseplate element (113) in an accelerator pedal fulcrum (111), and

   - at least one pedal return mechanism (114, 115, 116, 117, 118, 119, 120, 121) disposed between the accelerator pedal element and the baseplate element (112, 113), **characterised in that** the pedal return mechanism comprises at least one compression spring element (114, 115) which bears at one end against a first spring retaining element (118, 119) disposed on a pedal ring element (121) of the accelerator pedal element (112), and bears at the other end against a second spring retaining element (116, 117) disposed on the baseplate element (113), and

   - **in that** the accelerator pedal fulcrum is constructed as a shaft element (111) on which the pedal ring element (121) is rotatable on a friction surface element (121) disposed between it and the shaft element (111).

3. An accelerator pedal mechanism (201) for motor vehicles, particularly private motor vehicles, comprising at least

   - a baseplate element (213),

   - an accelerator pedal element (212) connected to the baseplate element (213) in an accelerator pedal fulcrum (211), and

   - at least one pedal return mechanism (214, 215, 216, 217, 218, 219, 220, 221) disposed between the accelerator pedal element and the baseplate element (212, 213), **characterised in that** the pedal return mechanism comprises at least one torsion spring element (214, 215) which is disposed with its spring start (224) with a first spring retaining element (216, 217) via a pedal ring element (221) on the accelerator pedal element (212), and is connected by its spring end (225) to a second spring retaining element (218, 219) disposed on the baseplate element (213), and

- **in that** the accelerator pedal fulcrum is constructed as a shaft element (211) on which the pedal ring element (221) is rotatable via the torsion spring element (214, 215) on a friction surface element (220) disposed between the inner surface of the torsion spring element (214, 215) and the shaft element (211).

4. A mechanism according to claim 1 or 2 or 3, **characterised in that** the tension, compression or torsion spring element (14, 15; 114, 115; 214, 215), the first spring retaining elements (16, 17; 116, 117; 216; 217) and the second spring friction retaining elements (18, 19; 118, 119; 218, 219) are provided in pairs.

5. A mechanism according to any one of claims 1 to 4, **characterised in that** a spring wire from which the spring elements (14, 15; 114, 115; 214, 215) are made is of round, oval, or rectangular cross-section.

6. A mechanism according to any one of claims 1 to 5, **characterised in that** the friction surface element (20, 120, 220) is made individually or in pairs.

7. A mechanism according to any one of claims 1 to 6, **characterised in that** a potentiometer, Hall, or angle-of-rotation sensor device operating on a similar principle is provided and is disposed in the region of the shaft element (11, 111, 211) or on the accelerator pedal element (12; 112; 212).

8. A mechanism according to any one of claims 1 to 7, **characterised in that** the shaft element (11, 111, 211) is part of a knuckle connecting element.

9. A mechanism according to any one of claims 1 to 8, **characterised in that** the shaft element (11, 111, 211) is constructed at least partially as a hollow cylinder.

10. A mechanism according to any one of claims 1 to 9, **characterised in that**

   - the friction surface element (20, 120, 220) consists of at least one material having a coefficient of friction ($\mu$) and

   - **in that** sequences of the movement of the accelerator pedal element (12, 112, 212) can be influenced with a rotation of the pedal ring element (221, 121, 221) by a product of the resultant spring force (Fr; F) and coefficient of friction ($\mu$).

**Revendications**

1. Dispositif de pédale d'accélérateur (1) pour véhicules automobiles, en particulier pour voitures particulières, qui comprend au moins:

   _ un élément de plaque de base (13),
   _ un élément de pédale d'accélérateur (12) qui est connecté à l'élément de plaque de base (13) à un point de rotation (11) de pédale d'accélérateur, et
   _ au moins un dispositif de rappel (14, 15, 16, 17, 18, 19, 20, 21) de pédale qui est monté entre l'élément de pédale d'accélérateur et l'élément de plaque de base (12, 13), **caractérisé en ce que**
   _ le dispositif de rappel de pédale comprend au moins un élément de ressort de traction hélicoïdal (14, 15) qui est connecté à une première extrémité avec un premier élément de maintien (16, 17) de ressort, qui est monté sur l'élément de plaque de base (13), et à l'autre extrémité avec un deuxième élément de maintien (18, 19) de ressort, qui est monté sur un élément annulaire (21) de pédale de l'élément de pédale d'accélérateur (12), et **en ce que**
   _ le point de rotation de la pédale d'accélérateur consiste en un élément axial (11) sur lequel l'élément annulaire (21) de pédale doit tourner sur un élément de surface glissante (20) monté entre lui et l'élément axial (11).

2. Dispositif de pédale d'accélérateur (101) pour véhicules automobiles, en particulier pour voitures particulières, qui comprend au moins:

   _ un élément de plaque de base (113),
   _ un élément de pédale d'accélérateur (112) qui est connecté à l'élément de plaque de base (113) à un point de rotation (111) de pédale d'accélérateur, et
   _ au moins un dispositif de rappel (114, 115, 116, 117, 118, 119, 120, 121) de pédale qui est monté entre l'élément de pédale d'accélérateur et l'élément de plaque de base (112, 113), **caractérisé en ce que**

_ le dispositif de rappel de la pédale comporte au moins un élément de ressort de compression (114, 115) qui repose à une première extrémité sur un premier élément de maintien (118, 119) de ressort, qui est monté sur un élément annulaire (121) de pédale de l'élément de pédale d'accélérateur (112) et repose à l'autre extrémité sur un deuxième élément de maintien (116, 117) de ressort qui est monté sur l'élément de plaque de base (113), et **en ce que**

_ le point de rotation de la pédale d'accélérateur consiste en un élément axial (111) sur lequel l'élément annulaire (121) de pédale doit tourner sur un élément (120) de surface glissante monté entre lui et l'élément axial (111).

**3.** Dispositif de pédale d'accélérateur (201) pour véhicules automobiles, en particulier pour voitures particulières, qui comprend au moins:

_ un élément de plaque de base (213),

_ un élément de pédale d'accélérateur (212) qui est connecté à l'élément de plaque de base (213) à un point de rotation (211) de pédale d'accélérateur, et

_ au moins un dispositif de rappel (214, 215, 216, 217, 218, 219, 220, 221) de pédale qui est monté entre l'élément de pédale d'accélérateur et l'élément de plaque de base (212, 213), **caractérisé en ce que**

_ le dispositif de rappel de pédale comporte au moins un élément de ressort de torsion (214, 215) qui est monté par son début (224) de ressort sur l'élément de pédale d'accélérateur (212) au moyen d'un premier élément de maintien (216, 217) de ressort par l'intermédiaire d'un élément annulaire (221) de pédale et est connecté par son extrémité (225) de ressort à un deuxième élément de maintien (218, 219) de ressort qui est monté sur l'élément de plaque de base (213), et **en ce que**

_ le point de rotation de la pédale d'accélérateur consiste en un élément axial (211) sur lequel l'élément annulaire (221) de pédale doit tourner sous l'effet de l'élément de ressort de torsion (214, 215) sur un élément de surface de glissement (220) monté entre la surface interne de l'élément de ressort de torsion (214, 215) et l'élément axial (211).

**4.** Dispositif selon l'une quelconque des revendications précédentes, **caractérisé en ce que** l'élément de ressort de traction, de compression ou de torsion (14, 15; 114, 115; 214, 215), les premiers éléments de maintien (16, 17; 116, 117; 216, 217) de ressorts et les deuxièmes éléments de maintien à glissement (18, 19; 118, 119; 218, 219) de ressorts sont disposés présents par paires

**5.** Dispositif selon l'une quelconque des revendications précédentes, **caractérisé en ce que** la section en coupe transversale d'un fil de ressort, dont sont fabriqués les éléments de ressort (14, 15; 114, 115; 214, 215) est ronde, ovale ou rectangulaire.

**6.** Dispositif selon l'une quelconque des revendications précédentes, **caractérisé en ce que** l'élément de surface de glissement (20, 120, 220) est réalisé de façon individuelle ou par paires.

**7.** Dispositif selon l'une quelconque des revendications précédentes, **caractérisé en ce qu'**il comporte un dispositif capteur d'angle de rotation fonctionnant selon le principe d'un potentiomètre, d'un élément de Hall ou un principe analogue, qui est agencé dans la zone de l'élément axial (11, 111, 211) ou sur l'élément de pédale d'accélérateur (12, 112, 212).

**8.** Dispositif selon l'une quelconque des revendications précédentes, **caractérisé en ce que** l'élément axial (11, 111, 211) fait partie d'un élément de connexion à articulation par charnière

**9.** Dispositif selon l'une quelconque des revendications précédentes, **caractérisé en ce que** l'élément axial (11, 111, 211) consiste au moins en partie en un cylindre creux

**10.** Dispositif selon l'une quelconque des revendications précédentes, **caractérisé en ce que**

_ l'élément de surface glissante (20, 120, 220) se compose d'au moins une matière à coefficient de friction ($\mu$) et **en ce que**,

_ lors d'une rotation de l'élément annulaire (21, 121, 221) de pédale, des séquences de mouvements de l'élément de pédale d'accélérateur (12, 112, 212) doivent être influencées par le produit de la force élastique (Fr; F) par le coefficient de friction ($\mu$) qui en résultent.

Fig.3

Fig.2

Fig.1

Fig.4

Fig.5

Fig.6

Fig.7

Fig.8

EP 1 153 785 B1

Fig.9

Fig.10

Fig.11